(19) 

Europäisches
Patentamt
European
Patent Office
Office européen
des brevets

(11) **EP 4 407 760 A1**

(12) **EUROPEAN PATENT APPLICATION**

(43) Date of publication:
**31.07.2024 Bulletin 2024/31**

(21) Application number: **23220627.6**

(22) Date of filing: **28.12.2023**

(51) International Patent Classification (IPC):
*H01M 50/105* (2021.01)   *B29C 48/08* (2019.01)
*B32B 7/02* (2019.01)   *B32B 15/085* (2006.01)
*B32B 27/32* (2006.01)   *H01M 50/119* (2021.01)
*H01M 50/121* (2021.01)   *H01M 50/126* (2021.01)
*H01M 50/131* (2021.01)   *H01M 50/183* (2021.01)
*H01M 50/186* (2021.01)   *H01M 10/0525* (2010.01)

(52) Cooperative Patent Classification (CPC):
**H01M 50/126; B29C 48/08; B32B 7/02;**
**B32B 15/085; B32B 27/32; H01M 50/105;**
**H01M 50/119; H01M 50/121; H01M 50/131;**
**H01M 50/183; H01M 50/186;** H01M 10/0525

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.12.2022 KR 20220189862**

(71) Applicant: **Youlchon Chemical Co., Ltd.**
**Seoul 07057 (KR)**

(72) Inventors:
• **SONG, Nok Jung**
**07057 Seoul (KR)**

• **HAN, Hee Sik**
**15430 Ansan-si (KR)**
• **JANG, Jee Eun**
**15430 Ansan-si (KR)**
• **LEE, Doohee**
**15430 Ansan-si (KR)**
• **KIM, Geon Ryong**
**15430 Ansan-si (KR)**
• **KIM, Yoohan**
**15430 Ansan-si (KR)**

(74) Representative: **V.O.**
**P.O. Box 87930**
**2508 DH Den Haag (NL)**

(54) **CELL POUCH FILM MAINTAINING OR INCREASING HIGH-TEMPERATURE SEALING STRENGTH, METHOD FOR PREPARING THE SAME, SECONDARY BATTERY USING THE CELL POUCH AND METHOD FOR MANUFACTURING THE SECONDARY BATTERY**

(57)    Disclosed is a cell pouch film, comprising at least an outer layer, a barrier layer, and a sealant layer structured in that order, wherein the sealant layer is formed by extrusion on the barrier layer, wherein the sealant layer has a glass transition temperature (Tg) of -10°C to -7°C, and wherein a crystallinity of the sealant layer is 28% to 32%, a preparation method thereof, a secondary battery using the cell pouch film, and a manufacturing method for the secondary battery. The sealing strength of the pouch film may be maintained or increased at high temperatures, thereby providing excellent high-temperature stability, which prevents electrolyte leakage during battery use in high-temperature environments and ensures battery safety with fewer defects.

EP 4 407 760 A1

**Description**

**Technical Field**

The present disclosure relates to a high-temperature sealing strength-maintaining or increasing cell pouch film, and a method for preparing the same, and specifically, the present disclosure relates to a cell pouch film wherein the sealant layer is formed by extrusion, and the high-temperature sealing strength may be maintained or increased by controlling a glass transition temperature and crystallinity of a sealant layer, a method for preparing the same, a secondary battery using the same, and a method for manufacturing the secondary battery.

[National Research and Development Project Supporting The Present Invention]
[Assignment unique number] 1415181922
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2022-09-01 ~ 2022-12-31
[Assignment unique number] 1415185612
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2023-01-01 ~ 2023-12-31

**Background Art**

Lithium secondary batteries (LiB) are being applied to many applications based on various advantages such as high energy density and excellent output.

As a laminated film for encasing a secondary battery, with a multilayer structure that surrounds an electrode group and an electrolyte of the secondary battery, a secondary battery pouch film is a key component material that determines the battery's stability, lifespan characteristics, and operational sustainability and requires mechanical flexibility and strength, high oxygen/water vapor barrier properties, high thermal sealing strength, chemical resistance to electrolyte solutions, electrical insulation, and high temperature stability, etc.

Cell pouch films typically consist of an outer layer, a barrier layer and an inner sealant layer.

The outer or outermost layer is composed of nylon or a blend of nylon and PET (polyethylene terephthalate), OPP (oriented polypropylene), polyethylene, and the like. The required properties of these outer layers or outermost layers include heat resistance, pinhole resistance, chemical resistance, formability, and insulation, etc.

The barrier layer requires formability as well as barrier properties against water vapor and other gases. In this respect, metals with formability such as aluminum (Al), iron (Fe), copper (Cu), and nickel (Ni) etc. are used in the barrier layer, and aluminum is currently used the most.

Since the sealant layer which is an inner layer is in contact with the electrolyte, it requires electrolyte resistance, and insulation resistance etc. as well as thermal adhesiveness and formability.

Meanwhile, a heat sealing is to make the inner surfaces (sealant layer) of the cell pouch film face each other, and then apply heat to seal them, so as to make the cell pouch film into a cell pouch.

The reason why heat sealing of the cell pouch film is important is that if the sealing is poor or weak, the electrolyte may leak out and the battery will not function properly.

In particular, the reason for measuring sealing strength at high temperatures regarding the heat sealing is that batteries are subjected to high temperatures during use, and if the sealing strength is weak at high temperatures, the sealing may lead to a leakage during use, which in turn may lead to a battery explosion.

Such seal stability at high temperatures is required for medium-sized and large-sized batteries for automotive and ESS applications with high safety requirements, but it is not easy to achieve and maintain high sealing strength at high temperatures in the actual manufacturing of pouch films for medium-sized and large-sized secondary batteries.

**Disclosure of Invention**

**Technical Problem**

In exemplary embodiments of the present disclosure, there are provided, in one aspect, a cell pouch film wherein its sealing strength may be maintained or increased at high temperature, a method for preparing the same, a secondary battery using the same, and a method for manufacturing the secondary battery.

In exemplary embodiments of the present disclosure, there are provided, in another aspect, a cell pouch film wherein its sealing strength may be maintained or increased at high temperature, thereby having excellent high-temperature stability and preventing leakage of electrolyte and securing battery safety even during battery use in a high-temperature environment, a method for preparing the same, a secondary battery using the same, and a method for manufacturing the secondary battery.

**Solution to Problem**

In exemplary embodiments of the present disclosure, there is provided a cell pouch film, comprising at least an outer layer, a barrier layer, and a sealant layer structured in that order, wherein the sealant layer is formed by non-lamination extrusion on the barrier layer, wherein the sealant layer has a glass transition temperature (Tg) of -10°C to -7°C, and wherein a crystallinity of the sealant layer, as measured by a method below, is 28% to 32%.

**[Crystallinity measurement method]**

Crystallinity of a sealant layer delaminated from a cell pouch film is measured using DSC equipment at a temperature range of -50°C to 200°C, with a heating rate of 10°C/min and a cooling rate of -20°C/min.

A crystallinity value is expressed as a percentage where an enthalpy value ($\triangle$H (J/g)) at a crystallization temperature (Tc) is divided by 100% crystallization enthalpy value of isopolypropylene (Iso-PP), which is 209 J/g.

According to an exemplary embodiment, a sealing strength of the cell pouch film in a TD direction when sealed at 180°C for 2 seconds may be at least -5% at high temperature relative to ambient temperature.

According to an exemplary embodiment, a sealing strength of the cell pouch film in the TD direction when sealed at 200°C for 2 seconds may be at least 1% at high temperature relative to ambient temperature.

According to an exemplary embodiment, a sealing strength of the cell pouch film in the TD direction when sealed at 220°C for 2 seconds may be at least -5% at high temperature relative to ambient temperature.

According to an exemplary embodiment, a sealing strength of the cell pouch film in a MD direction when sealed at 180°C for 2 seconds may be at least 1% at high temperature relative to ambient temperature.

According to an exemplary embodiment, a sealing strength of the cell pouch film in the MD direction when sealed at 200°C for 2 seconds may be at least 10% at high temperature relative to ambient temperature.

According to an exemplary embodiment, a sealing strength of the cell pouch film in the MD direction when sealed at 220°C for 2 seconds may be at least -5% at high temperature relative to ambient temperature.

According to an exemplary embodiment, an average value of an increase ratio of a high-temperature sealing strength of the cell pouch film in the TD direction of the following [Formula 1] for each case of sealing at 180°C for 2 seconds, sealing at 200°C for 2 seconds, and sealing at 220°C for 2 seconds may be within a range of -1% to 20%.

[Formula 1]

[(high-temperature TD sealing strength – ambient temperature TD sealing strength)/ambient temperature TD sealing strength]x100

According to an exemplary embodiment, an average value of an increase ratio of a high-temperature sealing strength of the cell pouch film in the MD direction of the following [Formula 2] for each case of sealing at 180°C for 2 seconds, sealing at 200°C for 2 seconds, and sealing at 220°C for 2 seconds may be within the range of 5% to 25%.

[Formula 2]

[(high-temperature MD sealing strength - ambient temperature

MD sealing strength)/ambient temperature MD sealing strength]x100

According to an exemplary embodiment, a sum of <the high-temperature sealing strength of the cell pouch film in the TD direction minus the ambient temperature sealing strength of the cell pouch film in the TD direction> and <the high-temperature sealing strength of the cell pouch film in the MD direction minus the ambient temperature sealing strength of the cell pouch film in the MD direction> for each case of sealing at 180°C, 200°C, and 220°C for 2 seconds may be within the range of -10 to 70 N/15mm.

In addition, in exemplary embodiments of the present disclosure, provided is a method for preparing the aforementioned cell pouch film, comprising forming a sealant layer by extruding by non-lamination extrusion on a barrier layer, wherein the sealant layer has a glass transition temperature (Tg) of -10°C to -7°C, and wherein a crystallinity of the sealant layer, as measured by a method below, is 28% to 32%.

**[Crystallinity measurement method]**

Crystallinity of a sealant layer delaminated from a cell pouch film is measured using DSC equipment at a temperature range of -50°C to 200°C, with a heating rate of 10°C/min and a cooling rate of -20°C/min.

A crystallinity value is expressed as a percentage where an enthalpy value ($\triangle$H (J/g)) at a crystallization temperature (Tc) is divided by 100% crystallization enthalpy value of isopolypropylene (Iso-PP), which is 209 J/g.

In addition, in exemplary embodiments of the present disclosure, provided is a secondary battery encased in the aforementioned cell pouch film.

According to an exemplary embodiment, the secondary battery may be for use in an electric vehicle or energy storage device.

In addition, in exemplary embodiments of the present disclosure, provided is a method for manufacturing a secondary battery, comprising encasing the secondary battery in the aforementioned cell pouch film.

**Advantageous Effects of Invention**

In exemplary embodiments of the present disclosure, the sealing strength of a cell pouch film may be maintained or increased at high temperatures. Consequently, the cell pouch film can exhibit excellent high-temperature stability, preventing electrolyte leakage and reducing defects during battery usage in high-temperature environments, thereby ensuring battery safety.

These secondary battery pouch films are useful for medium-sized to large-sized secondary battery pouches for electric vehicles and energy storage devices that require safety, especially high-temperature safety.

**Brief Description of Drawings**

The above and other aspects, features and advantages of the disclosed exemplary embodiments will be more apparent from the following detailed description taken in conjunction with the accompanying drawings in which:

FIG. 1 is a schematic diagram illustrating a configuration of a cell pouch film prepared by extrusion lamination.
FIG. 2 is a schematic diagram illustrating a configuration of a cell pouch film prepared by a non-lamination extrusion method.

**Mode for the Invention**

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

Term Definition

In this disclosure, when a secondary battery pouch film includes layer(s), the secondary battery pouch does not necessarily consist of only that layer, and additional layers may be included therein.

In this disclosure, being formed "on" a specific layer includes not only being formed directly on that layer, but also being formed after interposing another additional layer in between.

In this disclosure, Extrusion Coating (EC) layer in the sealant layers refers to a layer of an extruded resin, such as a polyolefin-based resin, preferably a polypropylene-based resin, serving as a bonding layer with the barrier layer (in the case of an extrusion lamination method) or serving as a sealing layer as well as a bonding layer with the barrier layer (in the case of a non-lamination extrusion method).

As used herein, maintaining or increasing of sealing strength at high temperature means that the increase ratio in the high-temperature sealing strength over the ambient temperature sealing strength, i.e., [(high-temperature sealing strength - ambient temperature sealing strength)/ambient temperature sealing strength]x100, is at least -5%. An increase ratio of -5% to 0% in the high-temperature sealing strength may be considered to mean that the sealing strength is maintained, even if it is a negative value.

MD is herein used as an abbreviation for machine direction.

TD is herein used as an abbreviation for transverse direction.

Ambient temperature herein may refer to a temperature of $20 \pm 5$ °C.

High temperature herein may refer to a temperature of 60 °C.

Description of Exemplary Embodiments

Exemplary implementations of the present disclosure are described below.

When preparing a secondary battery pouch, there are three methods for manufacturing a sealant layer: non-lamination extrusion, extrusion lamination, and solvent-dry lamination (hereinafter, "SDL").

The solvent dry lamination method is a method of bonding a barrier layer (metal layer) using a solvent-based adhesive on a polypropylene (PP) layer and drying the solvent-based adhesive, so that the sealant layer produced is composed of a polypropylene (PP) layer. The solvent-based adhesive may remain in the polypropylene (PP) layer after drying, but it is present in a thickness of about 4 pm or less and is insignificant, so its thickness may be neglected.

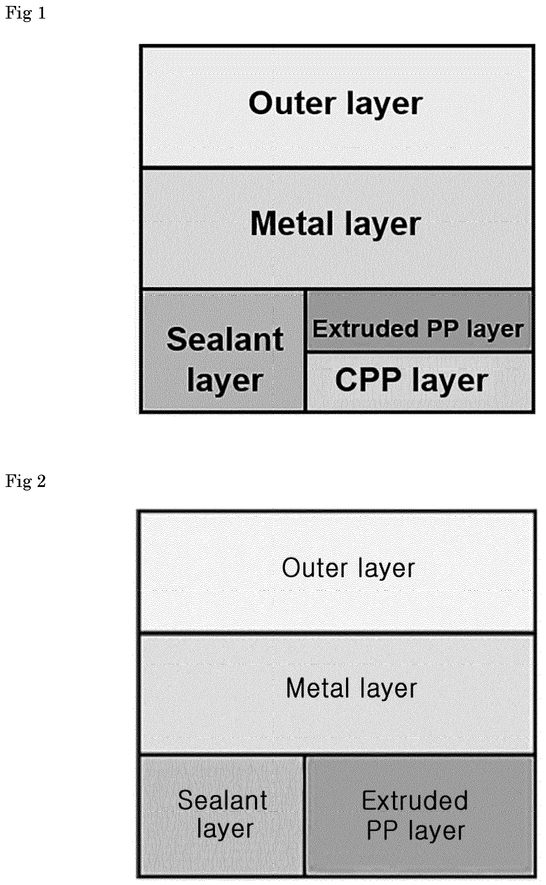

The extrusion lamination method is a method of extruding a polypropylene-based resin layer, preferably a polyolefin-based resin, preferably a polypropylene resin, which is mainly used as a sealing resin for a sealant layer, especially a cast polypropylene (CPP) resin layer, when bonding a barrier layer (metal layer). As a result, the sealant layer consists of an Extrusion Coating (EC) layer (mainly an extruded polypropylene layer) and a polypropylene (PP) layer resin, preferably a cast polypropylene (CPP) layer (or film) underneath (inward with respect to the pouch film) (see FIG. 1).

On the other hand, the non-lamination extrusion method is a method of forming a sealant layer during the manufacture of a cell pouch film by extruding (or co-extruding) a polyolefin-based resin, preferably a polypropylene-based resin, directly onto the barrier layer, instead of joining (laminating) the sealing resin layer or film such as a polypropylene-based resin with the barrier layer, as in the case of extrusion lamination or solvent dry lamination. As a result, the sealant layer consists of a layer by extrusion, e.g. a polypropylene layer by extrusion. Such a sealant layer by non-lamination extrusion may also be formed by co-extruding a first extruded layer and a second extruded layer.

The inventors of the present disclosure have found that when a sealant layer is formed by performing a non-lamination extrusion method, the glass transition temperature (Tg) of the sealant layer is -10°C to -7°C, and the crystallinity of the sealant layer measured by the following method is controlled to 28% to 32%, the sealing strength may be maintained or increased under high-temperature conditions after being left for 10 minutes at 60°C, and thus the high-temperature stability is excellent, which may prevent leakage of electrolyte even during use of the battery in high-temperature environments and secure battery safety.

The high-temperature sealing strength property is an essential property for the safety of medium and large-sized batteries such as automotive batteries, and by performing a non-lamination extrusion method while controlling the glass transition temperature (Tg) of the sealant layer to -10°C~-7°C and the crystallinity of the sealant layer measured by the following method to 28-32%, the sealing strength may be surprisingly maintained or increased under high-temperature conditions (measured after 10 minutes at 60°C).

According to an exemplary embodiment, the glass transition temperature (Tg) of the sealant layer may be -10°C ~ -7°C, preferably -9.5°C ~ -7°C, more preferably -9°C ~ -7°C. It may be seen that it is advantageous for high-temperature sealing strength when the sealant layer has a relatively high glass transition temperature (Tg). If the glass transition temperature (Tg) of the sealant layer is less than the above -10°C, the high-temperature sealing strength may be reduced, as may be seen from the data described below.

In a non-limiting example, the glass transition temperature (Tg) of the sealant layer may be at least -10°C, at least -9.5°C, at least -9°C, at least -8.5°C, at least -8°C, or at least -7.5°C. Alternatively, it may be -7°C or less, -7.5°C or less, -8°C or less, -8.5°C or less, -9°C or less, or -9.5°C or less.

According to an exemplary embodiment, the crystallinity of the sealant layer may be 28-32%, preferably 28.5-31.5%, more preferably 29-30%. It may be seen that a relatively low crystallinity is advantageous in terms of the fluidity of the polymer, which is advantageous for sealing strength at high temperatures. If the crystallinity of the sealant layer is greater than the above 32%, the high-temperature sealing strength may be reduced, as may be seen from the data described below.

In a non-limiting example, the crystallinity of the sealant layer may be at least 28%, at least 28.5%, at least 29%, at least 29.5%, at least 30%, at least 30.5%, at least 31%, or at least 31.5%. Alternatively, it may be 32% or less, 31.5% or less, 31% or less, 30.5% or less, 30% or less, 29.5% or less, 29% or less, or 28.5% or less.

According to an exemplary embodiment, the aforementioned glass transition temperature (Tg) or crystallinity may vary depending on the type of resin used in the sealant layer, such as the commonly used polypropylene-based resin, as known in the art, and may be appropriately adjusted by a skilled person in the art, for example, by changing the content of the main polymer of the polypropylene-based resin (changing the homopolypropylene or block polypropylene polymer content) or by using low molecular weight additives such as rubber components.

According to an exemplary embodiment, the cell pouch film may have a sealing strength in the TD direction when sealed at 180°C for 2 seconds that is at least -5%, such as within a range of -5% to 20%, or -3% to 15%, or -2% to 14%, at high temperature relative to ambient temperature.

According to an exemplary embodiment, the cell pouch film may have a sealing strength in the TD direction when sealed at 200°C for 2 seconds that is at least 1%, such as within a range of 1% to 20%, or 2% to 15%, or 2% to 14%, at high temperature relative to ambient temperature.

According to an exemplary embodiment, the cell pouch film may have a sealing strength in the TD direction when sealed at 220°C for 2 seconds that is at least -5%, such as within a range of -5% to 30%, or -3% to 29%, or -1% to 27%, at high temperature relative to ambient temperature.

According to an exemplary embodiment, the cell pouch film may have a sealing strength in the MD direction when sealed at 180°C for 2 seconds that is at least 1%, such as within a range of 1% to 10%, or 3% to 8%, or 4% to 7%, at high temperature relative to ambient temperature.

According to an exemplary embodiment, the cell pouch film may have a sealing strength in the MD direction when sealed at 200°C for 2 seconds that is at least 10%, such as within a range of 10% to 30%, or 15% to 25%, or 20% to 25%, at high temperature relative to ambient temperature.

According to an exemplary embodiment, the cell pouch film may have a sealing strength in the MD direction when sealed at 220°C for 2 seconds that is at least -5%, such as within a range of -5% to 45%, or -4% to 40%, or -4% to 38%, at high temperature relative to ambient temperature.

According to an exemplary embodiment, the cell pouch film may be such that the average value of the increase ratio of the high-temperature sealing strength in the TD direction of the following [Formula 1] in each case of sealing at 180°C for 2 seconds, sealing at 200°C for 2 seconds, and sealing at 220°C for 2 seconds is within the range of -1% to 20%, or -0.4% to 18.2%.

[Formula 1]

[(high-temperature TD sealing strength – ambient temperature TD sealing strength)/ambient temperature TD sealing strength]x100

According to an exemplary embodiment, the cell pouch film may be such that the average value of the increase ratio of the high-temperature sealing strength in the MD direction of the following [Formula 2] in each case of sealing at 180°C for 2 seconds, sealing at 200°C for 2 seconds, and sealing at 220°C for 2 seconds is within the range of 5% to 25%, or 7.6% to 21.5%.

[Formula 2]

[(high-temperature MD sealing strength - ambient temperature MD sealing strength)/ambient temperature MD sealing strength]x100

According to an exemplary embodiment, the cell pouch film may be such that the sum of the high-temperature sealing strength in the TD direction minus the ambient temperature sealing strength in the TD direction and the high-temperature sealing strength in the MD direction minus the ambient temperature sealing strength in the MD direction in each case of sealing at 180°C, 200°C, and 220°C for 2 seconds is within the range of -10 to 70 N/15mm, or -6 to 67 N/15mm.

According to an exemplary embodiment, the outer layer may be formed of nylon, polyethylene terephthalate (PET), polybutylene terephthalate (PBT), a mixed layer of nylon and PET, and the like. In a non-limiting example, the outer layer may preferably be a PET film of 7 to 12pm on the outermost side and a nylon film of 20 to 30pm on the inner side.

According to an exemplary embodiment, the metal layer may be formed of a metal such as aluminum, SUS, or copper, and is moisture permeable and impact resistant.

According to an exemplary embodiment, the polypropylene (CPP) layer of the sealant layer may contain various additives (rubber, elastomer, slip agent, etc.) depending on the required properties.

According to an exemplary embodiment, the total thickness of the secondary battery pouch film may be, for example, 60 to 185 pm. In an exemplary embodiment, the secondary battery pouch film may be 153 pm or more or 113 pm or less.

According to an exemplary embodiment, the thickness of the metal layer, which is the barrier layer, may be, for example, 20 to 80 pm, preferably 40 to 60 pm.

According to an exemplary embodiment, the thickness of the sealant layer may be, for example, 20 to 80 pm.

A method for preparing a secondary battery pouch film according to exemplary embodiments of the present disclosure includes forming a sealant layer by extruding polypropylene resin on a barrier layer, wherein the glass transition temperature (Tg) of the sealant layer is between -10°C and -7°C, and the crystallinity of the sealant layer measured by the method described above is between 28% and 32%.

Meanwhile, exemplary embodiments of the present disclosure provide a secondary battery encased with the aforementioned secondary battery pouch film. Such a secondary battery may be, for example, a lithium-ion battery, and in particular, a medium to large-scale secondary battery for an electric vehicle (EV) or energy storage system (ESS).

In addition, exemplary embodiments of the present disclosure provide a method for manufacturing a secondary battery including encasing the secondary battery with the aforementioned secondary cell pouch film as described above.

Exemplary embodiments of the present disclosure are described in more detail in the following examples. The embodiments disclosed herein are illustrated for purposes of illustration only, and embodiments of the present disclosure may be practiced in various forms and the scope of the present disclosure should not be construed as being limited to the embodiments described herein.

**[Experiment method]**

In the Examples and Comparative Examples, the outer layer is composed of a PET and nylon composite layer, and the metal layer is aluminum foil.

The Examples are formed by extruding polypropylene onto a barrier layer (non-lamination extrusion method), while the Comparative Examples are prepared by extrusion-lamination method in which polypropylene is extruded on a polypropylene (PP) layer and bonded to the barrier layer. The thickness of the metal layer, the respective thicknesses of the extruded and PP layers of the sealant layer, and the glass transition temperature, enthalpy, and crystallinity of the sealant layer are shown in Table 1. The total thickness of the pouch film is shown in Table 3 below.

[Table 1]

| | Sealant layer | | | | Ratio of layers | Tg | ΔH (J/g) | crystallinity |
|---|---|---|---|---|---|---|---|---|
| | Al | Sealant layer thickness | Extruded layer | PP layer | | | | |
| Example 1 | 60 | 80 | 80 | 0 | 0:80 | -8.68°C | 62.045 | 29.7% |
| Example 2 | 40 | 80 | 80 | 0 | 0:80 | -8.29°C | 65.545 | 31.4% |
| Comparative Example 1 | 60 | 80 | 30 | 50 | 50:80 | -13.41°C | 72.687 | 34.8% |
| Comparative Example 2 | 40 | 80 | 30 | 50 | 50:80 | -14.37°C | 70.229 | 33.6% |
| Comparative Example 3 | 60 | 100 | 30 | 70 | 70:100 | -14.23°C | 72.479 | 34.7% |
| Comparative Example 4 | 40 | 110 | 40 | 70 | 70:110 | -13.95°C | 71.245 | 33.9% |

(continued)

| | Sealant layer | | | | Ratio of layers | Tg | ΔH (J/g) | crystallini ty |
|---|---|---|---|---|---|---|---|---|
| | Al | Sealant layer thickness | Extrude d layer | PP layer | | | | |
| Comparativ e Example 5 | 40 | 80 | 40 | 40 | 40:80 | -11.89°C | 69.743 | 33.2% |
| Comparativ e Example 6 | 60 | 80 | 40 | 40 | 40:80 | -11.73°C | 69.395 | 33.4% |
| Comparativ e Example 7 | 40 | 80 | 0 | 80 | 80:80 | -14.31°C | 74.256 | 36.2% |

For the above Examples and Comparative Examples, sealing strength, defect (defective product) evaluation, and burst tests were performed as follows.

**<Preparation of specimen>**

The specimen is prepared by cutting the cell pouch film to 200 mm across (MD) and 100 mm down (TD).
The specimen is heat sealed in the MD direction.
The sealing conditions are as follows.

(1) Sealing time: 2.0 seconds
(2) Sealing temperature: Each 180°C, 200°C, 220°C
(3) Sealing pressure: 0.2MPa

**<Measurement of sealing strength >**

The specimen prepared above is cut to a 15 mm width in the longitudinal (TD) direction, and both sides of the film are held in a universal testing machine (UTM) jig for 90 degree peeling (UTM equipment: AGS-X by SIMADZU).
Sealing strength is measured at ambient temperature and high-temperature conditions. The maximum strength is expressed as the sealing strength. The unit is N/15mm.

(1) Ambient temperature conditions: Measurement speed (10mpm)
(2) High-temperature conditions: The measurement is performed under the same conditions as the ambient temperature measurement above, but after being placed in a 60°C heat chamber for 3 minutes. The heat chamber is a TCE-N300 from SIMADZU.

**<Measurement of Tg and crystallinity>**

The sealant layer is delaminated from the aforementioned specimen (the sealant layer is delaminated from the specimen before measuring the sealing strength). For this purpose, the specimen is completely immersed in a solution of FLOIL (Remover 200) from KantoKasei. Once the sealant layer is removed from the specimen, it is wiped with a rag or cotton tissue, washed with ethanol, wiped again with cotton tissue, and dried at ambient temperature.

(1) Measurement method of Tg

DSC250 equipment by TA is used. The measurement conditions are as follows: at a temperature range of -50°C to 200°C, with a heating rate of 10°C/min and a cooling rate of -20°C/min.
The Tg value is calculated using an analysis program (TRIOS) at -50°C, which is the approximate Tg value range of polypropylene.

(2) Crystallinity measurement method

DSC250 equipment by TA is used, as the same as the Tg measurement method. The measurement conditions are as follows: at a temperature range of -50°C to 200°C, with a heating rate of 10°C/min and a cooling rate of - 20°C/min. The value of crystallinity is calculated by obtaining the enthalpy of Tc ($\triangle$(J/g)) through the analysis program (TRIOS) and dividing it by the enthalpy of 100% crystallization of general isopolypropylene (Iso-PP), which is 209 J/g. The results are shown in [Table 2] below.

[Table 2]

| | Direction | Sealing strength (180°C 2.0 sec) (N/15mm) | | | Sealing strength (200°C 2.0 sec) (N/15mm) | | | Sealing strength (220°C 2.0 sec) (N/15mm) | | |
|---|---|---|---|---|---|---|---|---|---|---|
| | | Ambient tem P | High temp (after leaving for 3 min at 60°C) | High temp sealing strength increase (%) | Ambient temp | High temp (after leaving for 3 min at 60°C) | High temp sealing strength increase (%) | Ambient temp | High temp (after leaving for 3 min at 60°C) | High temp sealing strength increase (%) |
| Example 1 | MD | 112.3 | 120.3 | 7.1% | 90 | 107.7 | 19.7% | 101.9 | 140.2 | 37.6% |
| | TD | 89.6 | 101.7 | 13.5 % | 100.8 | 114.9 | 14.0% | 105.4 | 133.9 | 27.0% |
| Example 2 | MD | 99.9 | 103.8 | 3.9 % | 107.9 | 132.9 | 23.2% | 113.5 | 108.8 | -4.1% |
| | TD | 105.6 | 103.8 | -1.7% | 115.6 | 117.4 | 1.6% | 124.6 | 123.2 | -1.1% |
| Comparative Example 1 | MD | 104.3 | 59.4624 | -43.0% | 112.3 | 82.6736 | -26.4% | 113.7 | 94.9312 | -16.5% |
| | TD | 93.37 | 67.2212 | -28.0% | 118.9 | 82.478 | -30.6% | 123.4 | 102.186 | -17.2% |
| Comparative Example 2 | MD | 88.61 | 63.7656 | -28.0% | 101.5 | 66.2432 | -34.7% | 101.3 | 75.8276 | -25.2% |
| | TD | 96.56 | 72.698 | -24.7% | 95.32 | 71.068 | -25.4% | 98.84 | 77.5228 | -21.6% |
| Comparative Example 3 | MD | 100 | 89.0632 | -11.0% | 120.3 | 101.43 | -15.7% | 131.2 | 98.847 | -24.7% |
| | TD | 108.7 | 75.1104 | -30.9% | 105.3 | 92.9752 | -11.7% | 128.2 | 93.1708 | -27.3% |
| Comparative Example 4 | MD | 93.76 | 80.6524 | -14.0% | 107.1 | 85.6076 | -20.0% | 123.4 | 93.7576 | -24.0% |
| | TD | 99.69 | 80.7176 | -19.0% | 103.3 | 81.5652 | -21.0% | 127 | 97.7348 | -23.0% |
| Comparative Example 5 | MD | 103.8 | 86.1292 | -17.0% | 113.2 | 101.8424 | -10.0% | 114.3 | 101.619 | -11.1% |
| | TD | 102.5 | 90.1716 | -12.0% | 111 | 100.9948 | -9.0% | 113.3 | 101.748 | -10.2% |
| Comparative Example 6 | MD | 105.7 | 91.932 | -13.0% | 116.2 | 103.4072 | -11.0% | 119.4 | 103.32 | -13.5% |
| | TD | 97.41 | 81.826 | -16.0% | 106.3 | 92.5188 | -13.0% | 111.6 | 101.5816 | -9.0% |

| | Di re cti on | Sealing strength (180°C 2.0 sec) (N/15mm) | | | Sealing strength (200°C 2.0 sec) (N/15mm) | | | Sealing strength (220°C 2.0 sec) (N/15mm) | | |
|---|---|---|---|---|---|---|---|---|---|---|
| | | Amb ient tern P | High temp (after leaving for 3 min at 60°C) | High temp sealing strength increase (%) | Ambi ent temp | High temp (after leaving for 3 min at 60°C) | High temp sealing strength increase (%) | Ambie nt temp | High temp (after leaving for 3 min at 60°C) | High temp sealing strength increase (%) |
| Comparative Example 7 | M D | 89.4 5 | 69.764 | -22.0% | 92.26 | 74.7192 | -19.0% | 94.47 | 77.4576 | -18.0% |
| | T D | 86.4 6 | 70.0248 | -19.0% | 90.37 | 76.8056 | -15.0% | 92.65 | 76.8708 | -17.0% |

As can be seen from [Table 1] and [Table 2] above, in the case of Examples 1 and 2, the sealant layer consists only of an extruded layer, while in the case of Comparative Examples 1, 2, and 3, the sealant layer consists of an extruded layer and a PP layer. In Table 2, it can be seen that the sealing strength increases and is maintained at high temperature (measured after 3 minutes at 60°C) in the case of Examples 1 and 2, while the sealing strength decreases in the case of Comparative Examples 1 to 7. Therefore, it is confirmed that the case where the sealant layer consists only of an extruded layer is advantageous for high-temperature sealing strength.

Meanwhile, in Table 1, it can be seen that the Tg value is about - 8°C for Examples 1 and 2, and about -11°C to -14°C for the Comparative Examples. From Table 1 and Table 2, it can be seen that Examples 1 and 2 with higher Tg values increase or maintain sealing strength at high temperatures. Therefore, it can be seen that a relatively high Tg value of the sealant layer is advantageous for high-temperature sealing strength.

In addition, it can be seen from Table 1 that the crystallinity is 29.7% and 31.4% for Examples 1 and 2, and 33% or more for the Comparative Examples. As described above, it can be seen that a relatively low crystallinity is advantageous in terms of the fluidity of the polymer, and advantageous for sealing strength at high temperatures.

From the above, it is confirmed that a cell pouch film in which the sealant layer consists only of an extruded layer and has a certain glass transition temperature and crystallinity is advantageous for high-temperature sealing strength.

**<Evaluation of the number of defects based on a burst test>**

To evaluate the reliability of high-temperature sealing, the number of defects after sealing is evaluated.

Specifically, the cell pouch film iss foamed to 12 mm and then three-way sealed. The cell pouch is filled with red penetrant and water. The one remaining direction is sealed.

The sealing width is 2 mm, the time is 2 seconds, and the pressure is 0.2 MPa.

After heating in the 60°C chamber as described above for one day, it is pressed with a pressure tester for 30 minutes at a constant pressure (pressure: 300kgf).

For each of the 10 samples sealed at 180°C for 2 seconds, 10 samples sealed at 200°C for 2 seconds, and 10 samples sealed at 220°C for 2 seconds described above, the number of defects (high-temperature defects) is obtained and summed, i.e., the number of defects (high-temperature defects) among a total of 30 samples of 10 samples at 180°C, 10 samples at 200°C, and 10 samples at 220°C is determined. The criterion for defects is when the seal bursts, i.e., when red penetrant leaks out of the seal during pressing after sealing.

The average value of the increase rate of high-temperature sealing strength in the MD direction [((high temperature-ambient temperature)/ambient temperature)x100] for each case of sealing at 180°C for 2 seconds, sealing at 200°C for 2 seconds, and sealing at 220°C for 2 seconds is shown in [Table 3], and the average value of the increase rate of high-temperature sealing strength in the TD direction [((high temperature-ambient temperature)/ambient temperature)x100] is shown in Table 4. [Table 5] lists the number of high-temperature defects.

[Table 3]

|  | Thickness | Direction | Average value of increase rate(%) of high-temp sealing strength |
|---|---|---|---|
| Example 1 | 183 | MD | 21.5% |
| Example 2 | 153 | MD | 7.6% |
| Comparative example 1 | 183 | MD | -28.6% |
| Comparative example 2 | 153 | MD | -29.3% |
| Comparative example 3 | 203 | MD | -17.1% |
| Comparative example 4 | 203 | MD | -19.3% |
| Comparative example 5 | 153 | MD | -12.7% |
| Comparative example 6 | 183 | MD | -12.5% |
| Comparative example 7 | 183 | MD | -19.7% |

[Table 4]

|  | Thickness | Direction | Average value of increase rate(%) of high-temp sealing strength |
|---|---|---|---|
| Example 1 | 183 | TD | 18.2% |

(continued)

|  | Thickness | Direction | Average value of increase rate(%) of high-temp sealing strength |
|---|---|---|---|
| Example 2 | 153 | TD | -0.4% |
| Comparative example 1 | 183 | TD | -25.3% |
| Comparative example 2 | 153 | TD | -23.9% |
| Comparative example 3 | 203 | TD | -23.3% |
| Comparative example 4 | 203 | TD | -21.0% |
| Comparative example 5 | 153 | TD | -10.4% |
| Comparative example 6 | 183 | TD | -12.7% |
| Comparative example 7 | 183 | TD | -17.0% |

[Table 5]

|  | Direction | Average value of increase rate(%) of high-temp sealing strength | Number of high-temp defects (among 30) |
|---|---|---|---|
| Example 1 | MD | 21.5% | 5/30 |
|  | TD | 18.2% | 8/30 |
| Example 2 | MD | 7.6% | 10/30 |
|  | TD | -0.4% | 8/30 |
| Comparative example 1 | MD | -28.6% | 28/30 |
|  | TD | -25.3% | 25/30 |
| Comparative example 2 | MD | -29.3% | 30/30 |
|  | TD | -23.9% | 30/30 |
| Comparative example 3 | MD | -17.1% | 21/30 |
|  | TD | -23.3% | 27/30 |
| Comparative example 4 | MD | -19.3% | 28/30 |
|  | TD | -21.0% | 27/30 |
| Comparative example 5 | MD | -12.7% | 22/30 |
|  | TD | -10.4% | 21/30 |
| Comparative example 6 | MD | -12.5% | 19/30 |
|  | TD | -12.7% | 24/30 |
| Comparative example 7 | MD | -19.7% | 30/30 |
|  | TD | -17.0% | 30/30 |

As can be seen from [Table 3] to [Table 5] above, the average value of the high-temperature sealing strength increase (%) of the sealing temperatures in the Examples is at least -0.4% (TD direction) and at least 7.6% (MD direction), and it can be seen that the Examples are particularly superior to the Comparative Examples, with less than 10 high-temperature failures.

**<Evaluation of air pressure after burst test (pressurizing test)>**

To evaluate the reliability of high-temperature sealing, the air pressure after burst test (pressuring test) is evaluated.

Specifically, the cell pouch film is foamed to 12 mm and then three-way sealed. The cell pouch is filled with red penetrant and water. The one remaining direction is sealed.

The sealing width is 2 mm, the time is 2 seconds, and the pressure is 0.2 MPa.

After heating in the 60°C chamber for one day as described above, it is pressed with a pressure tester for 30 minutes at a constant pressure (pressure: 300kgf). The penetrant is checked for leakage, and the air pressure of the sample with no penetrant leakage (OK) is evaluated.

[Table 6] shows the values of high-temperature sealing strength in the TD direction minus ambient temperature sealing strength in the TD direction ("TD high temperature-ambient temperature" in the left table below) and the high-temperature sealing strength in the MD direction minus the ambient temperature sealing strength in the MD direction ("MD high temperature-ambient temperature" in the right table below) for each case of sealing at 180°C, 200°C, and 220°C for 2 seconds, and their sums ["TD high temperature-ambient temperature" + "high temperature-ambient temperature"]. [Table 7] shows the sum values and the air pressure according to the burst test (pressuring test) (after one day in a 60°C chamber).

[Table 6]

| TD N/15mm | 180°C sealing | | | MD N/15mm | 180°C sealing | | | Sum |
|---|---|---|---|---|---|---|---|---|
| | Ambient temperature | High temperature | TD High temp - Ambient temp | | Ambient temperature | High temperature | MD High temp - Ambient temp | |
| Example 1 | 89.6 | 101.7 | 12.1 | Example 1 | 112.3 | 120.3 | 8 | 20.1 |
| Example 2 | 105.6 | 103.8 | -1.8 | Example 2 | 99.9 | 103.8 | 3.9 | 2.1 |
| Comparative example 1 | 93.3664 | 67.2212 | -26.145 | Comparative example 1 | 104.32 | 59.4624 | -44.858 | -71.003 |
| Comparative example 2 | 96.5612 | 72.698 | -23.863 | Comparative example 2 | 88.6068 | 63.7656 | -24.841 | -48.704 |
| Comparative example 3 | 108.688 | 75.1104 | -33.578 | Comparative example 3 | 100.017 | 89.0632 | -10.954 | -44.532 |
| Comparative example 4 | 99.6908 | 80.7176 | -18.973 | Comparative example 4 | 93.7576 | 80.6524 | -13.105 | -32.078 |
| Comparative example 5 | 102.494 | 90.1716 | -12.323 | Comparative example 5 | 103.798 | 86.1292 | -17.669 | -29.992 |
| Comparative example 6 | 97.4088 | 81.826 | -15.583 | Comparative example 6 | 105.689 | 91.932 | -13.757 | -29.34 |
| Comparative example 7 | 86.4552 | 70.0248 | -16.43 | Comparative example 7 | 89.4544 | 69.764 | -19.69 | -36.121 |
| TD N/15mm | 200°C sealing | | | MD N/15mm | 200°C sealing | | | Sum |
| | Ambient temperature | High temperature | TD High temp - Ambient temp | | Ambient temperature | High temperature | MD High temp - Ambient temp | |
| Example 1 | 100.8 | 114.9 | 14.1 | Example 1 | 90 | 107.7 | 17.7 | 31.8 |
| Example 2 | 115.6 | 117.4 | 1.8 | Example 2 | 107.9 | 132.9 | 25 | 26.8 |
| Comparative example 1 | 118.925 | 82.478 | -36.447 | Comparative example 1 | 112.274 | 82.6736 | -29.601 | -66.048 |
| Comparative example 2 | 95.3224 | 71.068 | -24.254 | Comparative example 2 | 101.516 | 66.2432 | -35.273 | -59.528 |
| Comparative example 3 | 105.298 | 92.9752 | -12.323 | Comparative example 3 | 120.294 | 101.43 | -18.864 | -31.187 |

(continued)

| TD N/15mm | 200°C sealing | | | MD N/15mm | 200°C sealing | | | |
| --- | --- | --- | --- | --- | --- | --- | --- | --- |
| | Ambient temperature | High temperature | TD High temp - Ambient temp | | Ambient temperature | High temperature | MD High temp - Ambient temp | Sum |
| Comparative example 4 | 103.277 | 81.5652 | -21.712 | Comparative example 4 | 107.058 | 85.6076 | -21.451 | -43.162 |
| Comparative example 5 | 111.036 | 100.995 | -10.041 | Comparative example 5 | 113.187 | 101.842 | -11.345 | -21.386 |
| Comparative example 6 | 106.341 | 92.5188 | -13.822 | Comparative example 6 | 116.186 | 103.407 | -12.779 | -26.602 |
| Comparative example 7 | 90.3672 | 76.8056 | -13.562 | Comparative example 7 | 92.258 | 74.7192 | -17.539 | -31.1 |
| TD N/15mm | 220°C sealing | | | MD N/15mm | 220°C sealing | | | |
| | Ambient temperature | High temperature | TD High temp - Ambient temp | | Ambient temperature | High temperature | MD High temp - Ambient temp | Sum |
| Example 1 | 105.4 | 133.9 | 28.5 | Example 1 | 101.9 | 140.2 | 38.3 | 66.8 |
| Example 2 | 124.6 | 123.2 | -1.4 | Example 2 | 113.5 | 108.8 | -4.7 | -6.1 |
| Comparative example 1 | 123.358 | 102.186 | -21.172 | Comparative example 1 | 113.709 | 94.9312 | -18.778 | -39.95 |
| Comparative example 2 | 98.8432 | 77.5228 | -21.32 | Comparative example 2 | 101.321 | 75.8276 | -25.493 | -46.814 |
| Comparative example 3 | 128.183 | 93.1708 | -35.012 | Comparative example 3 | 131.248 | 98.847 | -32.401 | -67.413 |
| Comparative example 4 | 12701 | 97.7348 | -29.275 | Comparative example 4 | 123.358 | 93.7576 | -29.601 | -58.876 |
| Comparative example 5 | 113.252 | 101.748 | -11.504 | Comparative example 5 | 114.296 | 101.691 | -12.677 | -24.181 |
| Comparative example 6 | 111.622 | 101.582 | -10.041 | Comparative example 6 | 119.446 | 103.32 | -16.126 | -26.167 |
| Comparative example 7 | 92.6492 | 76.8708 | -15.778 | Comparative example 7 | 94.4748 | 77.4576 | -17.017 | -32.796 |

[Table 7]

| | 180°C sealing | Burst test (after leaving in High temp 60°C chamber for one day) |
|---|---|---|
| | (TD High temp-Ambient temp)+(MD high temp-Ambient temp) | |
| Example 1 | 20.1 | 300kgf |
| Example 2 | 2.1 | 300kgf |
| Comparative example 1 | -71.003 | 200kgf |
| Comparative example 2 | -48.704 | 200kgf |
| Comparative example 3 | -44.532 | 200kgf |
| Comparative example 4 | -32.078 | 200kgf |
| Comparative example 5 | -29.992 | 260kgf |
| Comparative example 6 | -29.34 | 260kgf |
| Comparative example 7 | -36.121 | 200kgf |
| | 200°C sealing | |
| | (TD High temp-Ambient temp)+(MD high temp-Ambient temp) | |
| Example 1 | 31.8 | 300kgf |
| Example 2 | 26.8 | 300kgf |
| Comparative example 1 | -66.048 | 160kgf |
| Comparative example 2 | --59.528 | 160kgf |
| Comparative example 3 | -31.187 | 260kgf |
| Comparative example 4 | -43.162 | 160kgf |
| Comparative example 5 | -21.386 | 260kgf |
| Comparative example 6 | -26.602 | 260kgf |
| Comparative example 7 | -31.1 | 160kgf |
| | 220°C sealing | |
| | (TD High temp-Ambient temp)+(MD high temp-Ambient temp) | |
| Example 1 | 66.8 | 300kgf |
| Example 2 | -6.1 | 300kgf |
| Comparative example 1 | -39.95 | 260kgf |
| Comparative example 2 | -46.814 | 160kgf |
| Comparative example 3 | -67.413 | 160kgf |
| Comparative example 4 | -58.876 | 160kgf |
| Comparative example 5 | -24.181 | 300kgf |
| Comparative example 6 | -26.167 | 300kgf |
| Comparative example 7 | -32.796 | 160kgf |

As shown in [Table 7], if the sum of the high-temperature sealing strength minus the ambient temperature sealing strength in the MD and TD directions is high, it can be seen that the three-way sealing (C-type sealing) during molding is good in both the MD and TD directions, and the sealing is well maintained at high external and internal pressures. This can improve battery safety.

While non-limiting and exemplary embodiments of the present disclosure have been described above, the technical idea of the present disclosure is not limited to the accompanying drawings or the above description. It will be apparent to a skilled person in the art that various modifications are possible without departing from the technical ideas of the present disclosure, and that such modifications fall within the scope of the claims of the present disclosure.

**Claims**

1. A cell pouch film, comprising at least an outer layer, a barrier layer, and a sealant layer structured in that order,

    wherein the sealant layer is formed by non-lamination extrusion on the barrier layer,
    wherein the sealant layer has a glass transition temperature (Tg) of -10°C to -7°C, and
    wherein a crystallinity of the sealant layer is 28% to 32% as measured by a crystallinity measurement method, wherein in said crystallinity measurement method:

    crystallinity of a sealant layer delaminated from a cell pouch film is measured using DSC equipment at a temperature range of -50°C to 200°C, with a heating rate of 10°C/min and a cooling rate of -20°C/min;
    a crystallinity value is expressed as a percentage where an enthalpy value ($\triangle$H (J/g)) at a crystallization temperature (Tc) is divided by 100% crystallization enthalpy value of isopolypropylene (Iso-PP), which is 209 J/g.

2. The cell pouch film of claim 1, wherein an increase ratio of a sealing strength in a TD direction when sealed at 180°C for 2 seconds is at least -5% at high temperature relative to ambient temperature.

3. The cell pouch film of any one of claims 1 to 2, wherein an increase ratio of the sealing strength in the TD direction when sealed at 200°C for 2 seconds is at least 1% at high temperature relative to ambient temperature.

4. The cell pouch film of any one of claims 1 to 3, wherein an increase ratio of the sealing strength in the TD direction when sealed at 220°C for 2 seconds is at least -5% at high temperature relative to ambient temperature.

5. The cell pouch film of any one of claims 1 to 4, wherein an increase ratio of the sealing strength in a MD direction when sealed at 180°C for 2 seconds is at least 1% at high temperature relative to ambient temperature.

6. The cell pouch film of any one of claims 1 to 5, wherein an increase ratio of the sealing strength in the MD direction when sealed at 200°C for 2 seconds is at least 10% at high temperature relative to ambient temperature.

7. The cell pouch film of any one of claims 1 to 6, wherein an increase ratio of the sealing strength in the MD direction when sealed at 220°C for 2 seconds is at least -5% at high temperature relative to ambient temperature.

8. The cell pouch film of any one of claims 1 to 7, wherein an average value of an increase ratio of the high-temperature sealing strength in the TD direction of the following [Formula 1] in each case of sealing at 180°C for 2 seconds, sealing at 200°C for 2 seconds, and sealing at 220°C for 2 seconds is within a range of -1% to 20%

$$[\text{Formula 1}]$$

$$[(\text{high-temperature TD sealing strength} - \text{ambient temperature TD sealing strength})/\text{ambient temperature TD sealing strength}]\times 100.$$

9. The cell pouch film of any one of claims 1 to 8, wherein an average value of an increase ratio of the high-temperature sealing strength in the MD direction of the following [Formula 2] in each case of sealing at 180°C for 2 seconds, sealing at 200°C for 2 seconds, and sealing at 220°C for 2 seconds is within the range of 5% to 25%

[Formula 2]

[(high-temperature MD sealing strength - ambient temperature MD sealing strength)/ambient temperature MD sealing strength]x100.

10. The cell pouch film of any one of claims 1 to 9, wherein a sum of <the high-temperature sealing strength of the cell pouch film in the TD direction minus the ambient temperature sealing strength of the cell pouch film in the TD direction> and <the high-temperature sealing strength of the cell pouch film in the MD direction minus the ambient temperature sealing strength of the cell pouch film in the MD direction> for each case of sealing at 180°C, 200°C, and 220°C for 2 seconds is within the range of -10 to 70 N/15mm.

11. A method for preparing a cell pouch film, comprising forming a sealant layer by extruding by non-lamination extrusion on a barrier layer,

wherein the sealant layer has a glass transition temperature (Tg) of -10°C to -7°C, and
wherein a crystallinity of the sealant layer is 28% to 32% as measured by a crystallinity measurement method, wherein in said crystallinity measurement method:

crystallinity of a sealant layer delaminated from a cell pouch film is measured using DSC equipment at a temperature range of -50°C to 200°C, with a heating rate of 10°C/min and a cooling rate of -20°C/min;
a crystallinity value is expressed as a percentage where an enthalpy value ($\triangle$H (J/g)) at a crystallization temperature (Tc) is divided by 100% crystallization enthalpy value of isopolypropylene (Iso-PP), which is 209 J/g.

12. A secondary battery, wherein the battery is encased with the cell pouch film of any one of claims 1 to 10.

13. The secondary battery of claim 12, wherein the secondary battery is for use in an electric vehicle or energy storage device.

14. A method for manufacturing a secondary battery, comprising encasing the secondary battery with the cell pouch film of any one of claims 1 to 10.

Fig 1

| Outer layer |  |
| Metal layer |  |
| Sealant layer | Extruded PP layer |
|  | CPP layer |

Fig 2

| Outer layer |  |
| Metal layer |  |
| Sealant layer | Extruded PP layer |

Europäisches
Patentamt

European
Patent Office

Office européen
des brevets

# EUROPEAN SEARCH REPORT

**Application Number**

EP 23 22 0627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 474 927 A (JIANGSU TURBO NEW MATERIAL TECH LIMITED COMPANY) 13 May 2022 (2022-05-13) * abstract * * claims 1-7 * | 1-14 | INV. H01M50/105 B29C48/08 B32B7/02 B32B15/085 B32B27/32 H01M50/119 |
| A | JP 2006 134692 A (TOPPAN PRINTING CO LTD) 25 May 2006 (2006-05-25) * abstract * * paragraph [0011] - paragraph [0058] * | 1-14 | H01M50/121 H01M50/126 H01M50/131 H01M50/183 |
| A | KR 102 184 118 B1 (YOULCHON CHEMICAL CO LTD [KR]) 27 November 2020 (2020-11-27) * paragraph [0004] - paragraph [0067] * | 1-14 | H01M50/186 ADD. H01M10/0525 |
| A | JP 6 276047 B2 (SHOWA DENKO PACKAGING CO LTD) 7 February 2018 (2018-02-07) * paragraph [0066] - paragraph [0071]; examples 1-3 * | 1-14 | |

**TECHNICAL FIELDS SEARCHED (IPC)**

H01M
B32B
B29C

The present search report has been drawn up for all claims

| Place of search | Date of completion of the search | Examiner |
|---|---|---|
| The Hague | 19 June 2024 | Pipoli, Tiziana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0627

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2024

| Patent document cited in search report | | Publication date | Patent family member(s) | | Publication date |
|---|---|---|---|---|---|
| CN 114474927 | A | 13-05-2022 | CN | 114474927 A | 13-05-2022 |
| | | | WO | 2023134094 A1 | 20-07-2023 |
| JP 2006134692 | A | 25-05-2006 | NONE | | |
| KR 102184118 | B1 | 27-11-2020 | NONE | | |
| JP 6276047 | B2 | 07-02-2018 | JP | 6276047 B2 | 07-02-2018 |
| | | | JP | 2015143107 A | 06-08-2015 |

For more details about this annex : see Official Journal of the European Patent Office, No. 12/82